# EUROPEAN PATENT APPLICATION

(11) **EP 0 545 548 A1**
(43) Date of publication of application: **09.06.1993**
(21) Application number: 92310019.2
(22) Date of filing: 02.11.1992
(51) Int. Cl.: B29D 12/00, B29C 67/22, C25B 9/00, B01D 25/21

(54) **Process for production of a component part of a filter-press type structure**

(30) Priority: 02.12.1991 GB 9125597
(71) Applicant: IMPERIAL CHEMICAL INDUSTRIES PLC, London SW1P 3JF (GB)
(72) Inventor: Boulton, Thomas Wesley, Warrington, Cheshire WA6 6DN (GB)
(74) Representative: Thomas, Ieuan

(57) **Abstract**

A process for the production of a component part, in particular a frame-like component part (1), of a filter-press type structure, in particular a filter-press type electrolytic cell, having an outer skin (20) of a plastics material and an inner core (21) by rotationally moulding a plastics material to form the outer skin (20) and thereafter forming the inner core (21) within the outer skin.

## Description

This invention relates to a process for the production of a component part of a filter-press type structure, and in particular to a process for the production of a component part of a filter-press type electrolytic cell, particularly a frame-like component part.

Filter-press type structures are known which comprise a plurality of frame-like components and, for example, a plurality of separators, e.g. a plurality of porous separators or a plurality of ion-exchange membranes. Various processes may be effected in such structures, for example, a filtration or concentration process. In recent years filter-press type structures for use as electrolytic cells have also been developed which comprise a large number of frame-like component parts, e.g. a large number of anodes, cathodes and frame-like structures which may also serve as gaskets. Such electrolytic cells may comprise a large number of alternating anodes and cathodes, for example fifty anodes alternating with fifty cathodes arranged in the form of a filter-press type structure. Such electrolytic cells may comprise even more anodes and cathodes, for example up to one hundred and fifty alternating cathodes and anodes, and the cells may be monopolar or bipolar.

Such electrolytic cells may comprise a plurality of frame-like parts which may serve as gaskets, or which may be provided with gaskets in addition. For example, in a filter-press type electrolytic cell, one or more frame-like structures may be positioned between adjacent anodes and cathodes and may serve to electrically insulate the anodes and cathodes from each other and also serve to provide spacings in the cell to form the anode and cathode compartments.

The frame-like structures may define a central space, this space inside of the frame providing in the electrolytic cell a space to form part of an anode or cathode compartment. Alternatively, the anodes and cathodes of the electrolytic cell may themselves be positioned in separate frame-like structures, for example each anode and cathode may be positioned in and be retained by a frame-like structure, e.g. in a recess in the frame. These frame-like parts, which may also serve as gaskets, are frequently made of plastics material.

In recent years filter-press type electrolytic cells have been developed for use in the production of chlorine and aqueous alkali metal hydroxide solution by the electrolysis of aqueous alkali metal chloride solution, particularly cells in which the separator is a substantially hydraulically impermeable cation exchange membrane. Where aqueous alkali metal chloride solution is electrolysed in an electrolytic cell of the membrane type the solution is charged from a header to the anode compartments of the cell and chlorine produced in the electrolysis and depleted alkali metal chloride solution are discharged from the anode compartments to a header, alkali metal ions are transported across the membranes to the cathode compartments of the cell to which water or dilute alkali metal hydroxide solution is charged from a header, and hydrogen and alkali metal hydroxide solution produced by the reaction of alkali metal ions with water are discharged from the cathode compartments of the cell to a header.

The manufacture of such component parts of a filter-press type structure, and in particular the manufacture of the frame-like component parts of a filter-press type electrolytic cell, does however present some problems.

For example, such parts, which are often generally planar, may have a complex shape and may vary in thickness at different regions of the part. Thus, they may possess complex internal ports, openings and passageways which allow passage of process fluids, as well as surface features which assist joint retention, as described for example in GB Patent 1595183 and European Patent 0080827. When such component parts are made from plastics material by conventional plastics processing techniques, e.g. compression moulding or injection moulding, there may be differential shrinkage when the plastics material cools during the production process with the result that a post-production machining step may be necessary in order to ensure that the component part has the required dimensions.

Where such a component part is to form a part of an electrolytic cell in which in use the electrolyte and/or the products of electrolysis is a highly corrosive material, for example, in the production of chlorine and alkali metal hydroxide by electrolysis of aqueous alkali metal chloride solution, the component parts of the electrolytic cell must possess resistance to chemical attack by the electrolyte and/or the products of electrolysis, for example, to the wet chlorine and to the chlorine-containing alkali metal chloride solution. However, it is economically undesirable to manufacture the component part wholly from materials which possess such resistance to chemical attack.

To overcome this economic problem and in order to produce a chemically resistant part, it is known to coat a frame-like component part of a filter-press type structure with a layer of a chemically resistant material, for example in the case of a component part for use in an electrolytic cell, with a layer of a fluoropolymeric material. However application of such a coating presents a problem as it may not be possible to make the coating adhere sufficiently well to the component part.

The present invention is intended to overcome these problems by providing a process for the production of a component part of a filter-press type structure, generally a frame-like component part, which may have a complex structure and which has an outer skin or layer of a plastics material which may be resistant to chemical attack and which is firmly adhered to an inner core, and in which the necessity for a post-production machining stage may be reduced.

According to the present invention there is provided a process for the production of a component part of a filter-press type structure, for example, a frame-like component part, having an outer skin of a plastics material and an inner core which process comprises rotationally moulding a plastics material to form the outer skin and thereafter forming the inner core within the outer skin.

The component parts produced by the process of the invention are intended for use as the component parts of a filter-press type structure and in a further embodiment of the invention, there is provided a filter-press type structure having one or more component parts, for example, frame-like component parts, produced by the process according to the invention.

Although not limited thereto, the process of the invention is particularly suitable for the production of a component part of a filter-press type electrolytic cell, for example, a frame-like component part of a filter-press type electrolytic cell, and in a further aspect of the invention there is provided a process of producing a component part of a filter-press type electrolytic cell, for example, a frame-like component part of a filter-press type electrolytic cell, having an outer skin of a plastics material and an inner core, which process comprises rotationally moulding a plastics material to form the outer skin and thereafter forming the inner core within the outer skin.

According to an embodiment of this further aspect of the invention there is provided a filter-press type electrolytic cell having one or more component parts, for example, frame-like component parts, produced by a process according to this further aspect of the invention.

The invention will be described hereafter by reference to the production of a frame-like component part of a filter-press type electrolytic cell, hereinafter referred to as an electrolyser frame, but the invention is not limited thereto.

The electrolytic cell may be a monopolar cell which comprises separate anodes and cathodes or it may be a bipolar cell containing composite electrodes one face of which functions as an anode and another face of which functions as a cathode.

By an electrolyser frame there is meant a frame-like structure of insulating material. The structure of the electrolyser frame will be determined by the particular type of electrolytic cell of which the frame forms a component part. For example, in a first type of electrolytic cell the electrodes, which may be anodes or cathodes or bipolar electrodes and which will, unless the context demands otherwise, be referred to hereafter as electrodes, may be positioned in a recess within the electrolyser frame. Alternatively, in a second type of electrolytic cell an electrolyser frame may be positioned between each anode and adjacent cathode, for example between each monopolar anode and adjacent monopolar cathode or between each anode of a bipolar electrode and an adjacent cathode of a bipolar electrode. In both cases the space within the electrolyser frame provides a space which serves as an anode and/or cathode compartment.

In a first step of the process according to the invention, the outer skin of the electrolyser frame is formed by rotationally moulding a suitable plastics material. The process of rotational moulding is a well known technique in the production of hollow articles (see, for example, MODERN PLASTICS ENCYCLOPAEDIA, OCTOBER 1980 VOLUME 57, NUMBER 10A, PAGE 397), in which a solid or liquid plastics material is charged to a mould, the mould is first heated and rotated about two or more axes simultaneously to spread plastics material over the internal surfaces of the mould and the mould is then cooled whilst being rotated. The mould is then dismantled and the hollow article is recovered from the mould.

However, particular advantages are provided by the use of rotational moulding in the manufacture of frame-like component parts of filter-press type structures in that the amount of expensive materials resistant to chemical attack which it is necessary to use is reduced, the outer skin of the component part may have a uniform thickness and be firmly bonded to the inner core and little or no post-production machining of the component part is required. The component part may be readily produced even where there are significant complexities or regions of different thickness.

The interior of the mould should have appropriate dimensions and shape such that the outer skin of the electrolyser frame which is produced by rotational moulding has the required dimensions and shape. Thus, the interior of the mould should be so shaped as to result in production of an outer skin having ports, cavities and/or projections which may be required in the electrolyser frame.

The mould may be assembled from two or more parts as at the end of the production process the mould must be dismantled in order to recover the outer skin which has been produced.

In the process a liquid or solid plastics material is charged to the mould either prior to or after assembly of the parts of the mould, and if necessary, the mould is assembled. Where the plastics material is solid, it will generally be in particulate form.

The mould is then generally heated, the temperature to which the mould is heated being dependent upon the particular plastics material used. Heating may be necessary in order to liquefy a solid thermoplastic plastics material. Where the plastics material is a cross-linkable resin, heating is generally required in order to effect cross-linking. During the first portion of the heating stage, when moulding solid particulate material, a porous skin is formed on the mould surface. This gradually melts to form a homogenous layer of uniform thickness. When moulding a liquid material, the material flows and coats the mould surface until the gel temperature of the resin is reached, at which time all flow ceases.

During heating, the mould is rotated about two or more axes, which axes may be at right angles to each other, in order to uniformly distribute plastics material over the internal surface of the mould.

The amount of plastics material that is charged to the mould may be chosen to give a coating on the internal surface of the mould, and thus an outer skin on the electrolyser frame which is ultimately produced, which has the desired thickness. Preferably, so as to balance the need for the outer skin to have a thickness sufficient to provide the required resistance to chemical attack by the process fluids in the electrolytic cell in which the electrolyser frame is installed, with the economic desirability of using as little as possible of the plastics material of the outer skin, the desired thickness of the outer skin may be between 0.5mm and 5mm, although thicknesses outside this range may be used.

The mould is then cooled, e.g. in order to solidify the outer skin when this is made of a thermoplastic material. The mould is rotated during the cooling stage until the outer skin has solidified, i.e. until the outer skin is able to retain its shape and dimensions. Cooling may be effected, for example, by forced air and/or water spray. The mould may then be dismantled and the finished outer skin removed. Alternatively, the outer skin may be retained in the mould, particularly where the outer skin itself is not dimensionally stable, for example where it is particularly thin, in order to maintain the shape of the outer skin. The inner core material may then be injected into the outer skin through a suitable orifice and the outer skin filled. The material of the inner core may itself be a cross-linkable resin.

Finally, and if necessary, the completed electrolyser frame comprising outer skin and inner core may be recovered from the mould by dismantling the mould.

The particular plastics materials from which the outer skin of the electrolyser frame may be formed will depend on the intended use of the electrolyser frame. Suitable materials include organic polymeric materials, which may be, for example, a polyolefin, e.g. polyethylene or polypropylene, or a chlorinated hydrocarbon, e.g. polyvinyl chloride or polyvinylidene chloride.

It is particularly desirable that the material of the electrolyser frame be chemically resistant to the liquors in the electrolytic cell, and when the cell is to be used in the electrolysis of aqueous alkali metal chloride solution the material of the frame may be a fluoro polymeric material, for example polytetrafluoroethylene, polyvinyl fluoride, polyvinylidene fluoride or fluorinated ethylene-propylene copolymer. For high resistance to chemical attack a perfluoro polymeric material is preferred.

In a second step of the process an inner core is then formed within the outer skin of the electrolyser frame. As hereinbefore described, the inner core may be injected into the cavity formed within the outer skin whilst the outer skin is in the mould.

Preferably however, so as to allow the most efficient use of the mould, this second step is performed after the outer skin has been removed from the mould. The inner core may be formed within the outer skin by, for example, injecting a foam or liquid reinforcing agent into the cavity, which reinforcing agent hardens on cooling. The inner core is preferably a strong, inexpensive material, for example a polyurethane foam or silicone rubber, or a cross-linkable resin, for example a crosslinkable polyester resin or a crosslinkable unsaturated polyurethane resin, e.g. a resin sold under the trade name "MODAR". ("MODAR" is a registered trade mark of ICI Chemicals and Polymers Ltd).

The material of the inner core of the electrolyser frame may be a rigid material so as to impart rigidity to the frame. Alternatively, it may be resilient, e.g. an elastomeric material, especially where the electrolyser frame is to be used as a compressible gasket.

The electrolyser frames may have a variety of complex internal and surface features which may be required to be formed in or on the outer skin. The electrolyser frame may have a space inside of the frame providing in the electrolytic cell a space to form a part of an anode or cathode compartment. The frame may be provided with projections and/or recesses in or on its surface which are adapted to cooperate with corresponding projections and/or recesses in or on a face of an adjacent frame. The projection and/or recesses may provide an aid to ready assembly and maintenance of the frames in a predetermined position in the electrolytic cell. The frames may be further provided with openings which in a cell comprising a plurality of such frames define common headers through which electrolyte may be fed to the electrode compartments and through which the products of electrolysis may be removed from the electrode compartments.

The invention is illustrated, with reference to the accompanying drawings, by the following embodiment, in which:
Fig 1 is a plan view of an electrolyser frame, produced by a process according to the invention.
Fig 2 is a x-sectional view along the line x-x in Fig 1 showing, in particular, the outer skin and inner core of the frame, and a plurality of frames when assembled as part of an electrolytic cell.

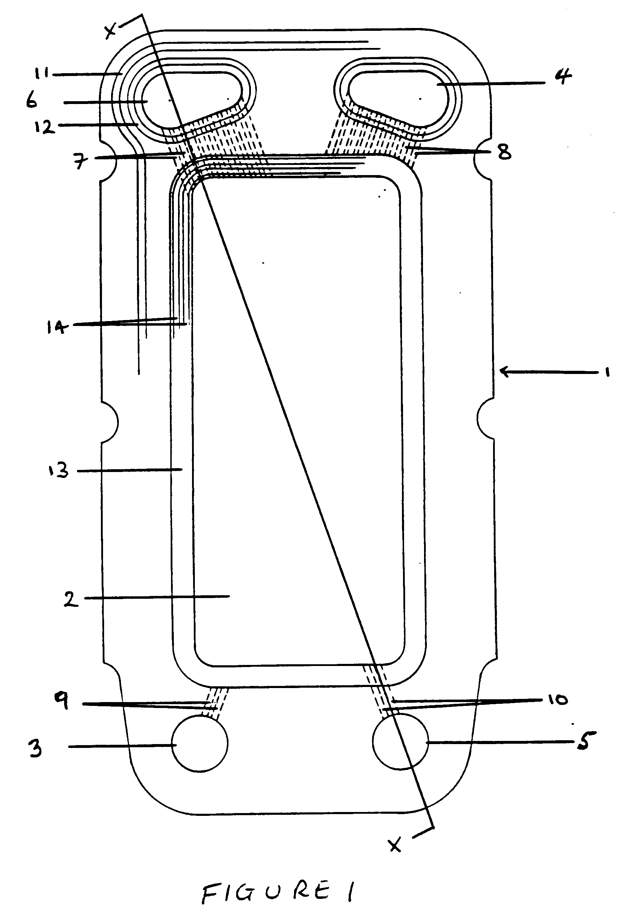

Referring to Figure 1, the frame like component part 1 defines a central opening 2 in which a bipolar electrode (not shown in Fig 1) is maintained in position. The central opening also provides a space which in the cell provides the anode and cathode compartments of the cell. The electrode is maintained in position in the central opening by the insertion of a wedging element 13 which is provided with circumferential recesses 14 in which, in the cell, gaskets in the form of o-rings are positioned. The frame like member 1 comprises four openings 3, 4, 5 and 6 which in the electrolytic cell, form a part of headers through which, respectively, electrolyte is charged to the anode compartments of the electrolytic cell, products of electrolysis are removed from the anode compartments of the cell, water or other liquor is charged to the cathode compartments of the cell, and products of electrolysis are removed from the cathode compartments of the cell. The central opening 2 is connected to the opening 3 and thus to the header through which electrolyte is charged to the anode compartments of the cell, via channels 9 in the wall of the frame, and the central opening 2 is connected to the opening 4 and thus to the header through which products of electrolysis are removed from the anode compartments of the cell via channels 8 in the wall of the frame. The central opening 2 is connected to the opening 5 and thus to the header through which water or other liquor is charged to the cathode compartments of the cell via channels 10 in the wall of the frame, and the central opening 2 is connected to the opening 6 and thus to the header through which products of electrolysis are removed from the cathode compartments of the cell via channels 7 in the wall of the frame. Around the opening 3, 4, 5 and 6 are formed recesses 11 and 12 in which o-ring gaskets are positioned so that in the electrolytic cell the frame is maintained in fluid-tight contact with the frames adjacent to it.

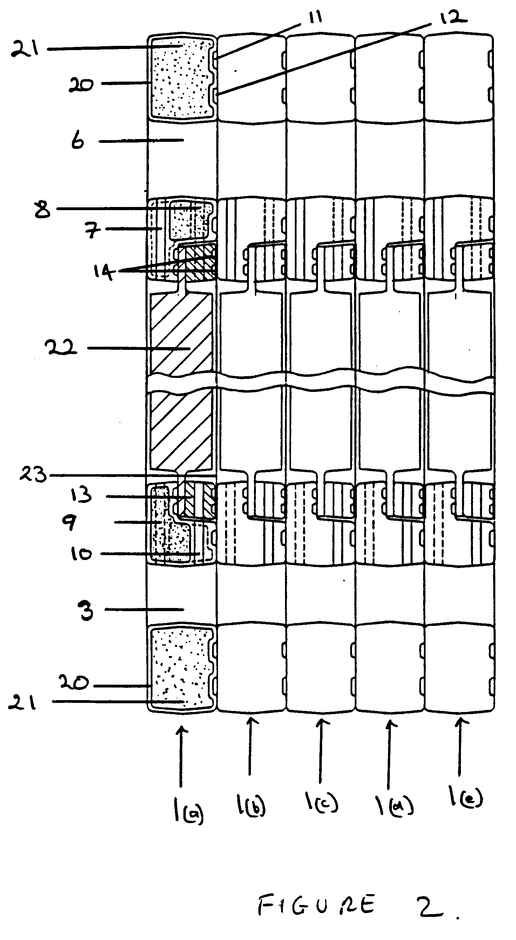

Referring to Figure 2, a number of frames 1(a) to 1(e) are shown stacked as they would be in construction of a filter press type electrolytic cell. In Fig 2 bipolar electrodes 22 are also shown, one bipolar electrode being maintained in position in the central opening 2 of each frame 1 by means of wedging elements 13. For clarity, many of the details shown on frame 1(a) have been omitted from frames 1(b) to 1(e), although they are identical to the frame 1(a). A cation exchange membrane 23 is positioned between each frame 1 and separates the cathode compartment of one cell, for example 1(a) from the anode compartment of an adjacent cell, for example 1(b). With reference in particular to frame 1(a) the wall of the frame comprises an outer skin 20 of polyvinylidene fluoride and an inner core 21 of a urethane resin ("Modar"). The cell is completed by compressing the frames between end plates (not shown) which end plates are connected to a source of electrical power.

Manufacture of the frame depicted in Figures 1 and 2 will now be described.

4 Kg of polyvinylidene fluoride (PVDF) moulding powder having a mean particle size of 500 microns was charged to one half of a cast aluminium mould, which had previously been lightly coated with polytetrafluoroethylene (PTFE) as a release agent, the mould having internal dimensions and shape necessary to provide the outer skin of a frame with the required dimension and shape. The two halves of the mould were then assembled and clamped together. The mould was placed into a gas fired furnace and was heated to and maintained at a temperature of 240^{o}C until the PVDF powder had melted, the mould was rotated about its longitudinal and a perpendicular axes for 10 minutes, and the PVDF formed a homogenous layer on the internal surface of the mould. The mould, whilst continuing to be rotated, was then moved into a cooling chamber in which it was cooled first by air and then water spray until the PVDF had solidified within the mould. Rotation of the mould was then stopped, and the mould opened. An outer skin of PVDF having a uniform wall thickness of 3mm was recovered from the mould.

The skin was restrained between plates and in one side of the skin a small hole was pierced and an unsaturated polyurethane/methyl methacrylate polymerisable composition (MODAR), was injected at ambient temperature into the cavity within the outer skin. The composition was allowed to set within the outer skin to produce the electrolyser frame having an outer skin and an inner core, having dimensions of 100 centimetres x 50 centimetres x 4 centimetres and complete with all headers, ports and grooves.

## Claims

1. A process for the production of a component part of a filter-press type structure having an outer skin of a plastics material and an inner core which process comprises rotationally moulding a plastics material to form the outer skin and thereafter forming the inner core within the outer skin.

2. A process as claimed in claim 1 in which the component part is a frame-like component part.

3. A process for the production of a component part of a filter-press type electrolytic cell having an outer skin of a plastics material and an inner core, which process comprises rotationally moulding a plastics material to form the outer skin and thereafter forming the inner core within the outer skin.

4. A process as claimed in claim 3 in which the component part is a frame-like component part.

5. A process as claimed in any one of claims 1 to 4 in which the outer skin is an organic polymeric material.

6. A process as claimed in claim 5 in which the organic polymeric material is a perfluorinated organic polymeric material.

7. A process as claimed in any one of claims 1 to 4 in which the inner core comprises a polyurethane foam, silicone rubber or cross-linkable resin.

8. A filter press-type structure having one or more component parts produced by a process as claimed in claim 1.

9. A filter-press type electrolytic cell having one or more component parts produced by a process as claimed in claim 3.

10. A filter-press type electrolytic cell having one or more frame-like component parts produced by a process as claimed in claim 4.
